# EUROPEAN PATENT APPLICATION

(11) **EP 4 807 716 A1**
(43) Date of publication of application: **16.09.2026**
(21) Application number: 24888370.4
(22) Date of filing: 03.09.2024
(51) Int. Cl.: G09B 29/00, G06F 3/04845

(54) **DISPLAY DEVICE, DISPLAY METHOD, AND NAVIGATION SYSTEM**

(30) Priority: 06.11.2023 JP 2023189652
(71) Applicant: TOYOTA JIDOSHA KABUSHIKI KAISHA, Toyota-Shi, Aichi-Ken 471-8571 (JP)
(72) Inventor: OTA, Takehira, Toyota-shi, Aichi 471-8571 (JP); YAMAMOTO, Ryusaku, Toyota-shi, Aichi 471-8571 (JP); WATANABE, Kohei, Toyota-shi, Aichi 471-8571 (JP); HIROSAWA, Shinya, Toyota-shi, Aichi 471-8571 (JP); KAIDA, Yuto, Toyota-shi, Aichi 471-8571 (JP); MATSUTANI, Shintaro, Toyota-shi, Aichi 471-8571 (JP)
(74) Representative: D Young & Co LLP
(86) International application number: PCT/JP2024/031597
(87) International publication number: WO 2025/100068

(57) **Abstract**

A display apparatus includes a display, a contact detector, and a controller. The display displays a map on a display surface. The contact detector detects the contact position of an object on the display surface. When the contact detector detects contact of the object, the controller determines, according to the contact position, a target region of a map displayed on the display, and causes the display to display an enlarged map of the target region at an increased scale.

## Description

### CROSS-REFERENCE TO RELATED APPLICATION

This application claims priority to Japanese Patent Application No. 2023-189652, filed on November 6, 2023, the entire contents of which are incorporated herein by reference.

### TECHNICAL FIELD

The present disclosure relates to a display apparatus, a display method, and a navigation system.

### BACKGROUND

A method for input operation for designating an area on a map displayed on a display screen is proposed. For example, see Patent Literature (PTL) 1. According to PTL 1, an area on a map is designated by an enlarged area that expands from a contact point with the lapse of time by a touch operation on a display screen with the user's finger.

### CITATION LIST

### Patent Literature

PTL 1: JP 2016-180877 A

### SUMMARY

### (Technical Problem)

However, technology disclosed in PTL 1 can designate an area on a map, but cannot display an enlarged map in which the designated area is enlarged. Moreover, there is apprehension that designating an area on a map and enlarging a map of the designated area may require multiple operation steps and result in complication.

In view of such circumstances, the present disclosure aims at improving operability when a region on a map is displayed in an enlarged view.

### (Solution to Problem)

A display apparatus according to an embodiment of the present disclosure includes:
a display configured to display a map on a display surface;
a contact detector configured to detect a contact position of an object on the display surface; and
a controller configured to, when the contact detector detects contact of the object, determine, according to the contact position, a target region of the map displayed on the display, and cause the display to display an enlarged map of the target region at an increased scale.

A display method according to an embodiment of the present disclosure is a display method performed by a controller of a display apparatus including a display configured to display a map on a display surface, and a contact detector configured to detect a contact position of an object on the display surface, the method including:
when the contact detector detects contact of the object, determining, according to the contact position, a target region of the map displayed on the display; and
causing the display to display an enlarged map of the target region at an increased scale.

A navigation system according to an embodiment of the present disclosure includes:
a display configured to display a map on a display surface;
a contact detector configured to detect a contact position of an object on the display surface; and
a controller configured to, when the contact detector detects contact of the object, determine, according to the contact position, a target region of the map displayed on the display, and cause the display to display an enlarged map of the target region at an increased scale.

### (Advantageous Effect)

The present disclosure can improve operability when a region on a map is displayed in an enlarged view.

### BRIEF DESCRIPTION OF THE DRAWINGS

In the accompanying drawings:
FIG. 1 is a block diagram illustrating a schematic configuration of a display apparatus according to an embodiment of the present disclosure;
FIG. 2 is a block diagram illustrating a schematic configuration of a navigation system according to an embodiment of the present disclosure;
FIG. 3 is a diagram explaining a first example of display of an enlarged map on a display surface;
FIG. 4 is a diagram illustrating an example of the expansion of a display region of the enlarged map;
FIG. 5 is a diagram illustrating an example of an operation of dragging the enlarged map on the display surface;
FIG. 6 is a diagram explaining a second example of display of an enlarged map on the display surface;
FIG. 7 is a flowchart illustrating processing for displaying, in an enlarged view, a part of a map displayed on the display apparatus;
FIG. 8 is a flowchart illustrating a first example of processing for determining a target region in FIG. 7;
FIG. 9 is a flowchart illustrating a second example of the processing for determining the target region in FIG. 7;
FIG. 10 is a flowchart illustrating a third example of the processing for determining the target region in FIG. 7;
FIG. 11 is a flowchart illustrating a fourth example of the processing for determining the target region in FIG. 7;
FIG. 12 is a flowchart illustrating a first example of processing for determining the placement position of an enlarged map in FIG. 7; and
FIG. 13 is a flowchart illustrating a second example of the processing for determining the placement position of the enlarged map in FIG. 7.

### DETAILED DESCRIPTION

An embodiment of the present disclosure will be described below, with reference to the drawings. The drawings used in the following description are schematic. Dimensional ratios or the like on the drawings do not necessarily match actual ones.

### (Display Apparatus)

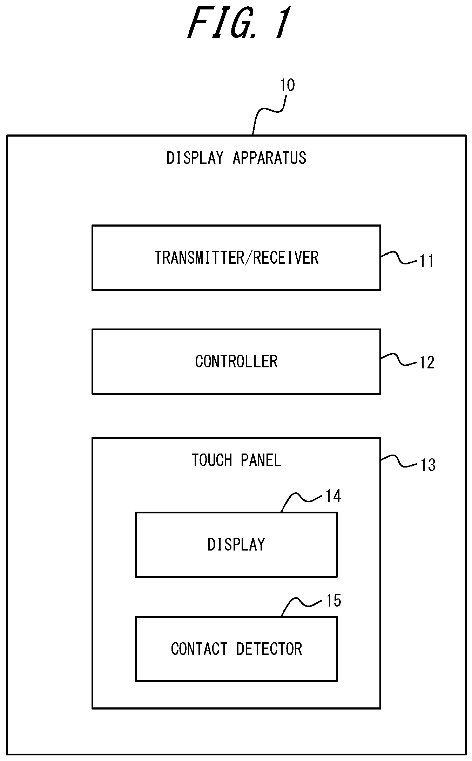

The display apparatus 10 according to an embodiment of the present disclosure includes a transmitter/receiver 11, a controller 12, and a touch panel 13, as shown in FIG. 1. The display apparatus 10 can process the map image acquired by the transmitter/receiver 11 and display it on the touch panel 13 via the controller 12.

The transmitter/receiver 11 performs signal transmission and reception with external devices of the display apparatus 10. The transmitter/receiver 11 acquires image signals of images displayed on the touch panel 13 from outside the display apparatus 10. The image signals acquired by the transmitter/receiver 11 include map images. Additionally, the transmitter/receiver 11 transmits signals corresponding to inputs to the touch panel 13. Furthermore, the transmitter/receiver 11 may receive information from external devices to the controller 12 and send information from the controller 12 to external devices.

The controller 12 includes at least one processor, at least one programmable circuit, at least one dedicated circuit, or any combination thereof. The processor is a general purpose processor such as a central processing unit (CPU) or a graphics processing unit (GPU), or a dedicated processor that is dedicated to specific processing. The programmable circuit is, for example, a field-programmable gate array (FPGA). The dedicated circuit is, for example, an application specific integrated circuit (ASIC).

The controller 12 executes processes related to the operations of the display apparatus 10 while controlling components of the display apparatus 10. The controller 12 performs predetermined processing on the image acquired from the transmitter/receiver 11 and displays it on the touch panel 13. The controller 12 may modify the image acquired from the transmitter/receiver 11 based on input signals from the touch panel 13. The controller 12 can perform predetermined processing in response to operations such as tap, double tap, long tap, drag, flick, etc., performed by the user by contacting their finger or the like on the touch panel 13.

The controller 12 may determine whether the image acquired from the transmitter/receiver 11 includes map information. The controller 12 may perform processing to make changes, such as enlarging a part of the map, only when a map is being displayed in response to predetermined operations by the user.

The touch panel 13 has both a display function for displaying information including images and an input function for accepting information input. The touch panel 13 includes a display unit 14 that displays an image including a map on the display surface and a contact detector 15 that detects the contact position of an object on the display surface.

The display unit 14 displays an image on the display surface based on the image signals. The display unit 14 includes various flat panel displays such as a liquid crystal display (LCD), an organic electro-luminescence (EL) display, an inorganic EL display, and a plasma display panel (PDP).

The contact detector 15 is a device that detects input by the contact of an object. The contact detector 15 is configured integrally with the display surface of the display unit 14 and can accept input in conjunction with the display content of the display unit 14. Methods for detecting contact with an object include various types such as capacitive methods, resistive film methods, and surface acoustic wave methods.

### (Navigation System)

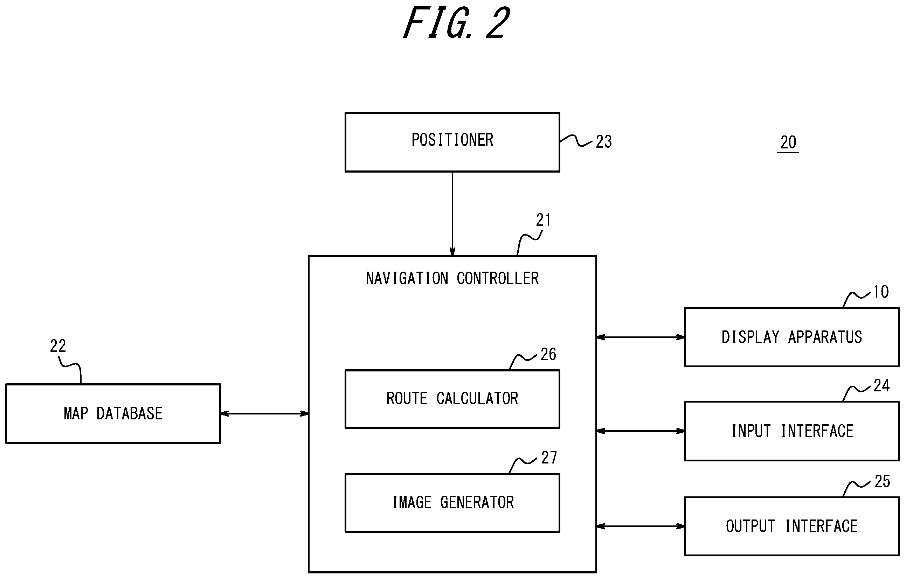

The display apparatus 10 of the present disclosure may acquire and display image signals from the in-vehicle navigation system 20. The display apparatus 10 may be included in the navigation system 20. The navigation system 20 according to an embodiment of the present disclosure includes the display apparatus 10, navigation controller 21, map database 22, and positioner 23, as shown in FIG. 2. The display apparatus 10 functions as an input/output interface for the navigation system 20. In addition to the display apparatus 10, the navigation system 20 may include an input interface 24 such as a microphone and an output interface 25 such as a speaker.

The navigation controller 21 includes at least one processor, at least one programmable circuit, at least one dedicated circuit, or any combination thereof, similar to the controller 12 of the display apparatus 10. The navigation controller 21 controls the entire navigation system 20 and performs information processing related to the operation of the navigation system 20.

The navigation controller 21 includes a route calculator 26 and an image generator 27. The navigation controller 21 may execute part or all of the processing performed by the controller 12 of the display apparatus 10, on behalf of the controller 12. Alternatively, the navigation controller 21 may collaborate with the controller 12 to perform the functions of the controller 12. The navigation controller 21 may function as the controller for the entire navigation system 20.

The map database 22 is a database of map information including roads. The map database 22 may be stored in a storage device within the vehicle that is equipped with the navigation system 20. Alternatively, the map database 22 may be stored on an external server of the vehicle, configured so that the navigation controller 21 can obtain information via a communication network.

As an example, the map database 22 is composed of road network information, background map information, facility information, etc. Road network information expresses the connections and shapes of roads by points called nodes and lines called links. Nodes and links are identified by location information specified by latitude and longitude. The road network information further includes attribute information for each node and link. Attribute information includes, for example, information such as the names of intersections and roads, the presence of traffic lights, speed limits, road widths, the number of lanes, and the presence of right-turn and left-turn lanes. Background map information includes map information of the shapes of land, buildings, rivers, and railway lines in the background of the roads. Facility information includes, for example, addresses, phone numbers, facility types, business hours, and the locations of parking lot entrances for public facilities, cultural facilities, transportation facilities, and commercial facilities.

The positioner 23 detects the current position of the vehicle equipped with the navigation system 20. The positioner 23 includes, for example, a Global Positioning System (GPS) receiver and can use signals from the GPS receiver to obtain information on the latitude and longitude of the current position of the vehicle. Additionally, the positioner 23 may employ a receiver compliant with another Global Navigation Satellite System (GNSS) instead of or in addition to the GPS receiver. Furthermore, the positioner 23 may use signals from various detection devices such as heading sensors, rudder angle sensors, and distance sensors, in addition to signals from the GPS receiver, to identify the position.

The route calculator 26 calculates the route to the destination input by the user using the display apparatus 10 and/or the input interface 24, and provides route guidance to the user. To perform route guidance, the route calculator 26 can utilize map information stored in the map database 22 and current position information obtained from the positioner 23. The route calculator 26 monitors the current position obtained from the positioner 23. Based on the current position, the route calculator 26 generates guidance to be provided to the user. The guidance includes instructions for right or left turns, the distance to the next right or left turn point, and notifications of arrival at the destination. When the current position deviates from the route, the route calculator 26 recalculates the route and generates guidance content for the user. The guidance generated by the route calculator 26 is displayed on the display apparatus 10 via the image generator 27 and/or output through the output interface 25.

The image generator 27 adds information contained in the road network information and facility information to the background map image obtained from the map database 22 according to predetermined rules. The image generator 27 may display information such as the names of intersections, road names, and facility names on the map according to the scale. Furthermore, the image generator 27 synthesizes route information calculated by the route calculator 26 and image elements indicating the vehicle's position on the map image. Route information is synthesized on the map image, for example, as a thick line of a specific color. When the navigation system 20 provides route guidance, the image generator 27 generates a map image centered on the current position obtained from the positioner 23. Additionally, the image generator 27 may generate a map image of a location other than the vehicle's current position based on user operations. The image generated by the image generator 27 is transmitted to the transmitter/receiver 11 of the display apparatus 10.

The route calculator 26 and the image generator 27 constitute a part of the navigation controller 21. The navigation controller 21 may include more components to realize various functions provided by the navigation system 20.

### (Enlarged display using the display apparatus)

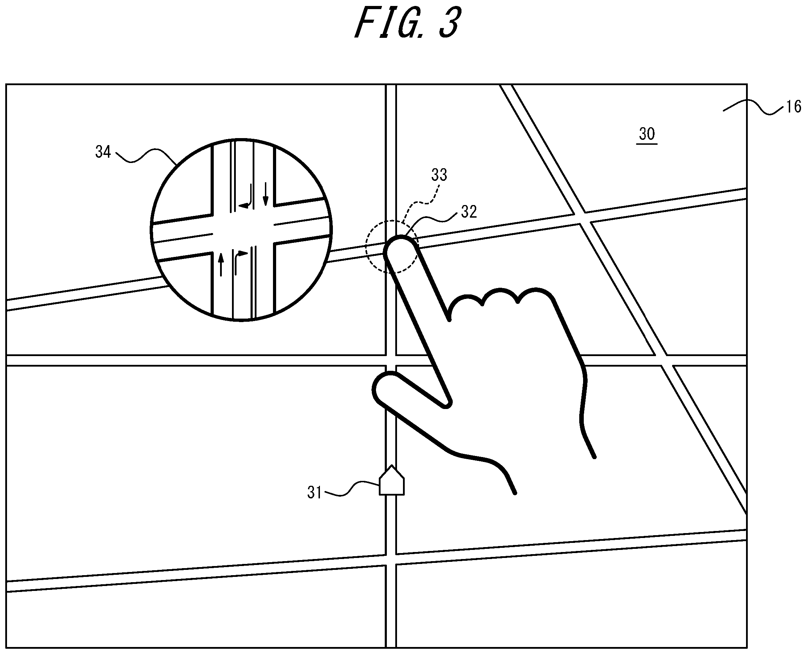

Referring to FIG. 3, the first example of the method for enlarging a portion of the map image 30 using the display apparatus 10 will be explained. In FIG. 3, the display surface 16 of the display section 14 of the display apparatus 10 shows the map image 30 displayed by the navigation system 20. The position of the vehicle in which the user is riding is indicated by the vehicle image 31. The user touches the position on the display surface 16 where they want to enlarge the map image 30 with their fingertip 32. The fingertip 32 corresponds to an object. As a result, the contact detector 15 detects that the fingertip 32 has made contact with the display surface 16 and the contact position. The contact position may be detected as coordinates on the display surface 16. The contact detector 15 outputs this information to the controller 12. It should be noted that the user is not limited to using their fingertip 32 to touch the touch panel 13. The user may also use a stylus or similar device.

When the user makes contact with their fingertip 32 on the display surface 16 in a predetermined manner, the controller 12 recognizes that the user is indicating an enlargement of the image at the position where the fingertip 32 is touching. The predetermined manner is, for example, a state of remaining stationary at a specific position on the display surface 16 and continuing contact for a predetermined time or more. Such a contact manner is referred to as a "long tap" or "long press."

When the controller 12 recognizes that the user is indicating an enlargement of a portion of the map image 30, it first determines the target region 33 on the map image 30 that is to be enlarged. The target region 33 can be determined based on the contact position where the fingertip 32 is in contact with the display surface 16. When the contact detector 15 detects the position where the fingertip 32 is in contact as the contact region on the display surface 16 of the touch panel 13, the controller 12 can use the contact position as a position that is representative of that contact region. The position that is representative of the contact region can, for example, be the centroid of that region. The controller 12 can, for example, set the area within a predetermined radius centered on the contact position as the target region 33.

The controller 12 then determines the position to display an enlarged map 34 that has scaled up the target region 33 on the display 14. The enlarged map 34 is arranged at a distance greater than a predetermined distance from the contact position so as not to overlap with it. The predetermined distance may be expressed in either a distance represented in length units or a distance represented in pixel counts. By doing so, it is possible to prevent the enlarged map 34 from being obscured from view by the user's finger. The position where the enlarged map 34 is arranged can, for example, be above the contact position of the fingertip 32, but is not limited to this. For example, when the contact position is close to the upper edge of the display surface 16 of the touch panel 13, the enlarged map 34 may be arranged to the right or left of the contact position. The controller 12 may display the enlarged map 34 at an appropriately placeable position.

In FIG. 3, the target region 33 and the enlarged map 34 are displayed in a circular shape, but they are not limited to circular shapes and may be rectangular or other shapes.

The controller 12 may display an image that is an enlarged version of the image of the target region 33 of the original map image 30 as the enlarged map 34 on the display 14. The controller 12 may display more detailed information than the image of the target region 33 before enlargement using the enlarged map 34. In this case, the controller 12 may request and obtain from a device that provides image signals, such as the navigation controller 21, a map image with a larger scale, attribute information included in the road network information, or facility information, and use this information for display on the enlarged map 34. For example, in the map image 30 before enlargement, an image of an intersection where roads intersect may be displayed in the enlarged map 34 as an image containing information about lanes indicating the direction of travel. Also, for example, a facility that was only shown in shape in the map image 30 before enlargement may be displayed in the enlarged map 34 including the facility name. As mentioned above, some or all of these processes may be executed by the navigation controller 21 of the navigation system 20. The controller 12 of the display apparatus 10 may execute these processes in cooperation with the navigation controller 21. The navigation controller 21 may obtain the information necessary for generating the enlarged map 34 from the map database 22 as needed.

In the above description, the target region 33 was set as a circle with a predetermined radius. However, the size of the target region 33 may vary according to the manner of contact of the fingertip 32 with the display surface 16. For example, the contact detector 15 detects the contact region where the user's fingertip 32 touches the display surface 16 of the touch panel 13. The controller 12 may change the target region 33 according to the size of the contact region. The size of the contact region may be defined as the area where the fingertip 32 is in contact with the display surface 16 of the touch panel 13. For example, if the user expands the contact region by pressing the fingertip 32 strongly against the display surface 16, the target region 33 may become wider accordingly. Additionally, at this time, the scale of the enlarged map 34 may be fixed, and the size of the enlarged map 34 may change according to the size of the contact region.

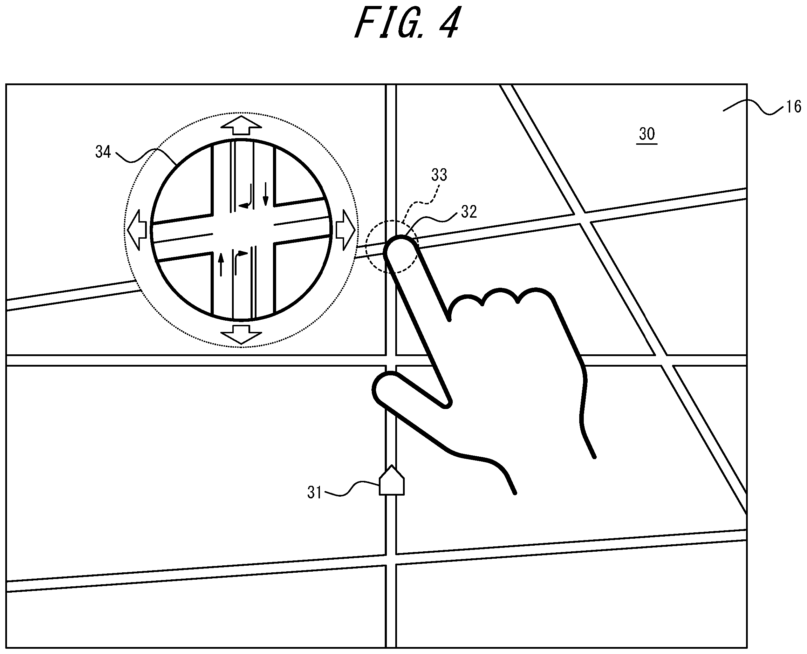

FIG. 4 is a diagram explaining the enlargement of the display area of the enlarged map 34 on the touch panel 13. In this display example, as the contact region where the user's fingertip 32 touches the display surface 16 of the touch panel 13 expands, the scale of the enlarged map 34 remains the same while the display area of the enlarged map 34 becomes wider. This allows for an intuitive and easy-to-understand user interface for the user. If the size of the display area of the enlarged map 34 changes, and the position of the enlarged map 34 shifts with the change in size, it may become difficult for the user to see. Therefore, it is preferable that the center position of the enlarged map 34 does not change. Thus, at the point when the display of the enlarged map 34 is started, the center position where the enlarged map 34 is displayed may be determined so that the enlarged map 34 does not overlap with the position of the fingertip 32 by a predetermined distance or more when the enlarged map 34 is at its maximum size.

In another embodiment, the controller 12 may determine the enlargement factor of the scale of the target region 33 according to the detected size of the contact region. The controller 12 can increase the enlargement factor as the contact region becomes larger. In this case, when the user expands the contact region by pressing the fingertip 32 strongly against the display surface 16 of the touch panel 13, the enlargement factor of the enlarged map 34 increases. Therefore, the more the user presses a specific location on the map image 30, the more the image of the pressed location is enlarged and displayed. This allows for an intuitive and easy-to-understand user interface for the user. At this time, similarly to what is shown in FIG. 4, as the enlargement factor of the enlarged map 34 increases, the display area of the enlarged map 34 can be made larger.

On the other hand, if the enlargement factor of the scale of the enlarged map 34 changes, the size of the display area of the enlarged map 34 does not necessarily have to change and can remain fixed. In that case, the controller 12 may change the target region 33 according to the enlargement factor of the enlarged map 34. That is, if the user expands the contact region by pressing the fingertip 32 strongly against the display surface 16 of the touch panel 13, the target region 33 may be determined to a narrower range calculated from the display area and enlargement factor of the enlarged map 34 accordingly.

Furthermore, in another embodiment, the contact detector 15 may be configured to detect the magnitude of the pressing force when the fingertip 32 presses the display surface 16 of the touch panel 13. In this case, the contact detector 15 can be equipped with a pressure sensor. The controller 12 can determine the enlargement factor of the scale of the target region 33 according to the magnitude of the pressing force detected by the contact detector 15. For example, the controller 12 may increase the enlargement factor as the pressing force increases. In this case, the stronger the user presses a specific location on the map image 30, the image of the pressed location is enlarged and displayed. This allows for an intuitive and easy-to-understand user interface for the user. In particular, compared to using the size of the contact region that does not change linearly with the force applied to the fingertip 32, this method uses the pressing force, making it easier for the user to intuitively control the enlargement factor.

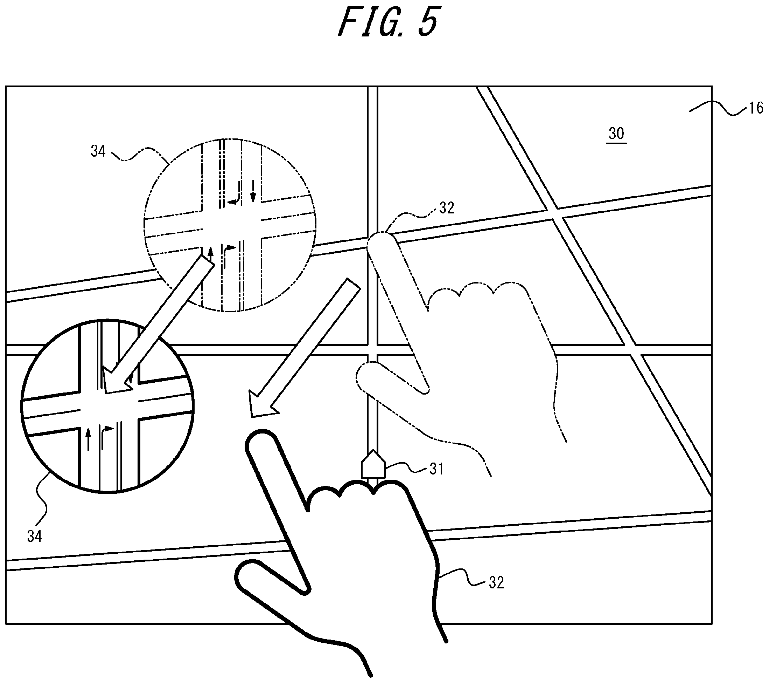

The controller 12 continues to display the enlarged map 34 on the display 14 while the contact detector 15 detects the contact of the fingertip 32 with the display surface 16, and when the contact detector 15 no longer detects contact, it may end the display of the enlarged map 34 and erase it from the map image 30. Also, when the controller 12 recognizes a predetermined operation of the fingertip 32 on the display surface 16 due to a change in the contact position detected by the contact detector 15, it may continue to display the enlarged map 34 even after the contact detector 15 stops detecting the contact position. The predetermined operation is, for example, as shown in FIG. 5, the action of the user dragging the fingertip 32 on the display surface 16 of the touch panel 13. "Dragging" means the action of moving while pressing the display surface 16. In this case, the enlarged map 34 moves in conjunction with the movement of the fingertip 32 and continues to be displayed at the new location. By doing this, the user can move the enlarged map 34 to a position that does not obstruct the display surface 16 and continue the display. Also, the predetermined operation may include the action of pressing the fingertip 32 strongly at that location momentarily and then releasing it from the display surface 16. In this case, the enlarged map 34 may continue to be displayed at the same location. The controller 12 may erase the enlarged map 34 that is continuing to be displayed after a predetermined time has passed since the contact of the fingertip 32 is no longer detected by the contact detector 15. The predetermined time may be set arbitrarily by the user. Alternatively, the controller 12 may stop the display of the enlarged map 34 when the target region 33 is no longer displayed on the display surface 16 due to the movement of a vehicle equipped with the navigation system 20.

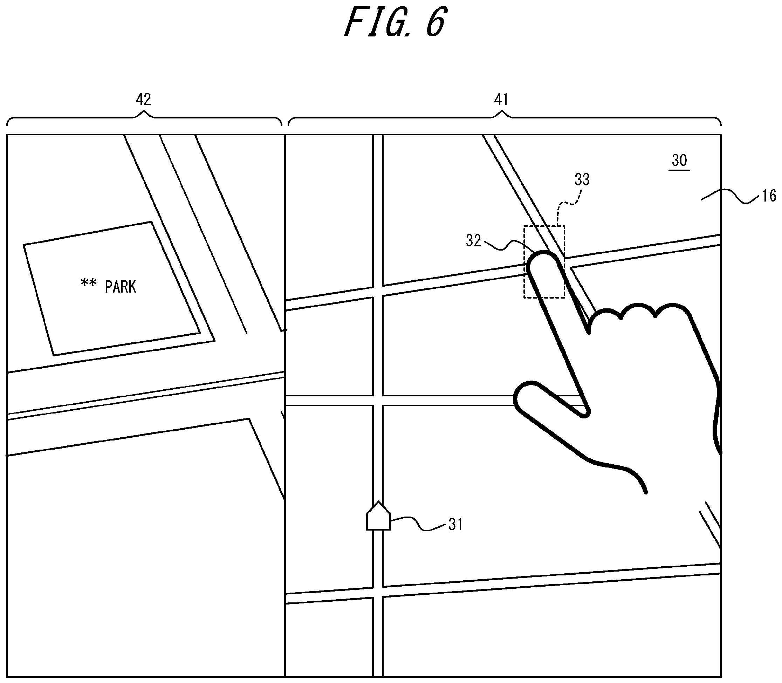

In the above embodiment, the enlarged map 34 was displayed over the map image 30. However, the display method of the present disclosure is not limited to this. In other embodiments, as shown in FIG. 6, the controller 12 may divide the display surface 16 into two regions, the first divided region 41 and the second divided region 42, when the contact detector 15 detects the contact of the fingertip 32. The controller 12 may display the enlarged map 34 in the second divided region 42, which does not include the contact position with the fingertip 32. As an example, the first divided region 41 and the second divided region 42 may be regions that divide the display surface 16 into two left and right areas. The first divided region 41 and the second divided region 42 may be regions that equally divide the area of the display surface 16, but this is not limited to that. For example, the controller 12 may divide the display surface 16 into a 1:2 or 2:1 ratio so that the contact position of the fingertip 32 is included in the wider first divided region 41, and may display the enlarged map 34 in the narrower second divided region 42. In this case, the target region 33 of the map image 30 to be enlarged may be rectangular to match the shape of the second divided region 42. The ratios of 1:2 and 2:1 are illustrative, and the controller 12 may divide the display area of the touch panel 13 in any ratio.

### (Method of displaying the enlarged map)

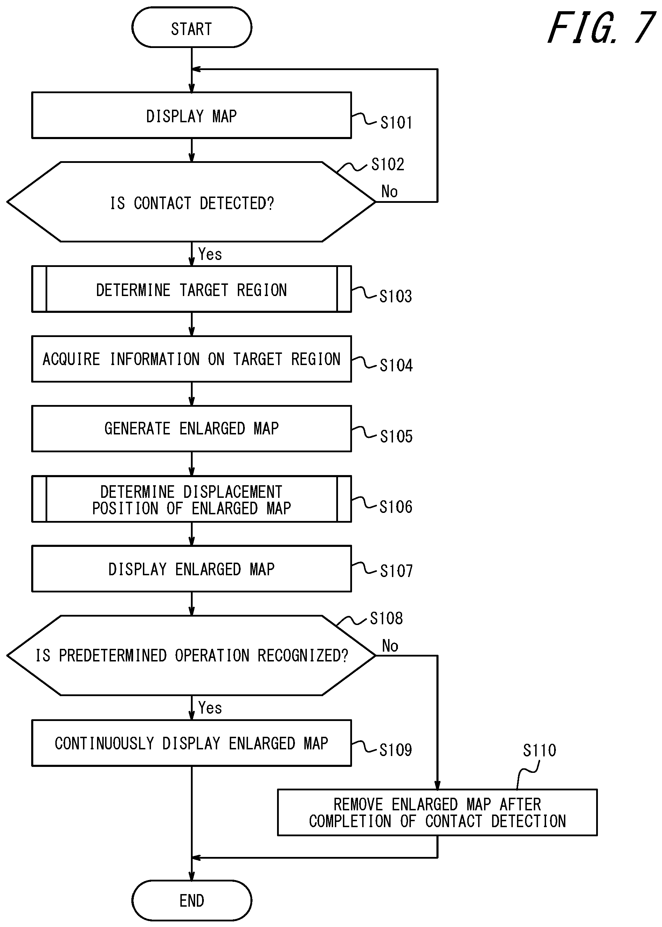

Next, the processing executed by the controller 12 of the display apparatus 10 will be described based on the flowcharts from FIG. 7 to FIG. 13. The flowcharts from FIG. 7 to FIG. 13 correspond to the display method of the present disclosure performed by the controller 12. The display method disclosed herein can be performed according to a program by a processor included in the controller 12. Such a program may be stored in a non-transitory computer readable medium. Examples of the non-transitory computer readable media may include, but are not limited to, a hard disk, RAM, ROM, flash memory, a CD-ROM, an optical storage device, and a magnetic storage device.

As shown in the flowchart of FIG. 7, the controller 12 displays an image including the map image 30 on the display unit 14 based on the image signal acquired from the transmitter/receiver 11 (S101).

The controller 12 monitors the presence or absence of contact on the display surface 16 in a predetermined manner based on the output from the contact detector 15 (S102). Contact in a predetermined manner means an instruction to enlarge and display a part of the map image 30 displayed on the display unit 14. When the controller 12 detects contact in a predetermined manner from the contact detector 15, for example, contact by long press (S102: Yes), it proceeds to the processing of determining the target region 33 to be enlarged (S103). While no contact in a predetermined manner is detected by the controller 12 (S102: No), it continues to display the map (S101) as is.

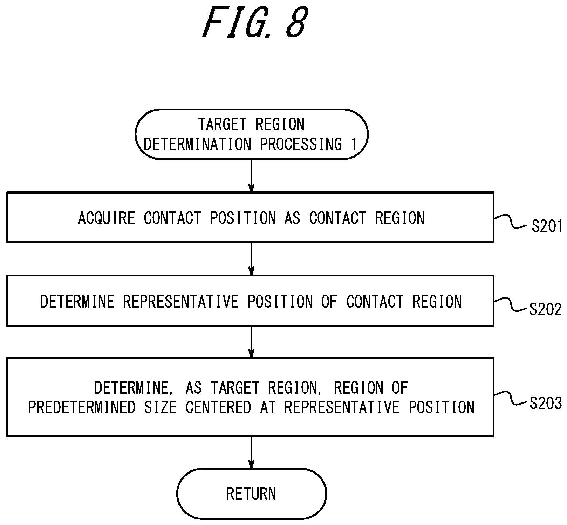

The method of determining the target region 33 in step S103 includes multiple methods. The method of determining the target region 33 will be explained using the flowcharts from FIG. 8 to FIG. 11.

The method of determining the target region 33 in the first example is a method of determining the target region 33 based on the contact position of the fingertip 32 detected by the contact detector 15 on the display surface 16, as shown in FIG. 8. This method corresponds to the method of displaying the enlarged map 34 explained using FIG. 3.

First, the controller 12 acquires the contact position of the user's fingertip 32 as a contact area with a certain width based on the output from the contact detector 15 (S201). The contact area is a region represented by coordinates on the display surface 16 of the touch panel 13.

The controller 12 determines the representative position of the contact region (S202). The representative position is a position that represents the contact position of the fingertip 32 on the display surface 16 of the touch panel 13. The representative position may be calculated, for example, as the centroid of the contact region. The representative position may be determined by methods other than calculating the centroid.

The controller 12 determines a region of predetermined size centered on the representative position as the target region 33 to be enlarged (S203). The region of predetermined size may be a circle centered on the representative position, or a square or rectangle with the representative position as the intersection of the diagonals. The region of predetermined size may have other shapes.

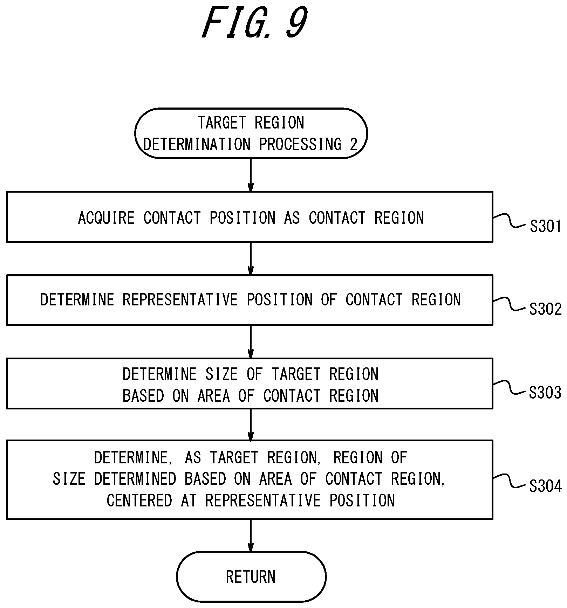

The method for determining the target region 33 in the second example varies the size of the target region 33 according to the area of the contact region of the fingertip 32 detected by the contact detector 15 on the display surface 16, as shown in FIG. 9. This method corresponds to the display method of the enlarged map 34 explained using FIG. 4.

In the flowchart of FIG. 9, S301 and S302 are the same as S201 and S202 in FIG. 8, so the explanation is omitted.

The controller 12 calculates the area of the contact region of the fingertip 32 on the display surface 16 and determines the size of the target region 33 based on the calculated area (S303). For example, the area of the target region 33 may be proportional to the area of the contact region of the fingertip 32 on the display surface 16. Also, if the target region 33 is circular, the diameter of the target region 33 may be determined according to the area of the contact region of the fingertip 32 on the display surface 16.

The controller 12 determines the region of predetermined size based on the area of the contact region centered on the representative position as the target region 33 (S304).

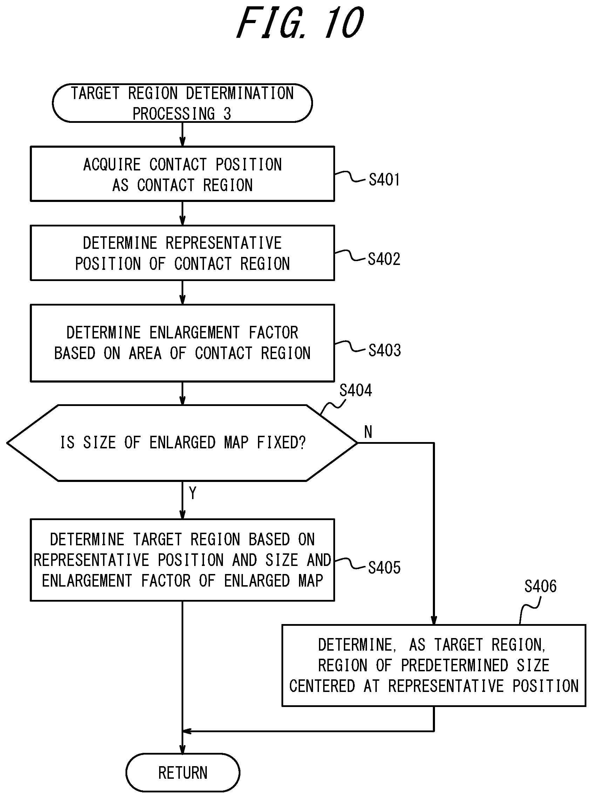

The method for determining the target region 33 in the third example assumes that the enlargement factor is determined according to the contact region of the fingertip 32 detected by the contact detector 15 on the display surface 16, and a part of the map image 30 is enlarged and displayed at this enlargement factor, as shown in FIG. 10. The flowchart of FIG. 10 includes both cases where the size of the enlarged map 34 is fixed and where it varies.

In the flowchart of FIG. 10, S401 and S402 are the same as S201 and S202 in FIG. 8, so the explanation is omitted.

Following S402, the controller 12 determines the enlargement factor of the enlarged map 34 according to the area of the contact region of the fingertip 32 on the display surface 16 (S403). The controller 12 may set a larger enlargement factor the larger the contact area.

The following processing by the controller 12 differs depending on whether the size of the enlarged map 34 is fixed or variable (S404). If the size of the enlarged map 34 is fixed (S404: Yes), the controller 12 determines the target region 33 based on the representative position, the size of the enlarged map 34, and the enlargement factor (S405). The controller 12 determines the size of the target region 33 by calculating backwards from the size and enlargement factor of the enlarged map 34. For example, if the target region 33 is circular, the controller 12 determines the radius of the target region 33 from the size and enlargement factor of the enlarged map 34.

If the size of the enlarged map 34 is variable (S404: No), the controller 12 may determine a region of a predetermined width centered at the representative position as the target region 33 (S406). In this case, the size of the enlarged map 34 changes according to the enlargement factor determined in S403.

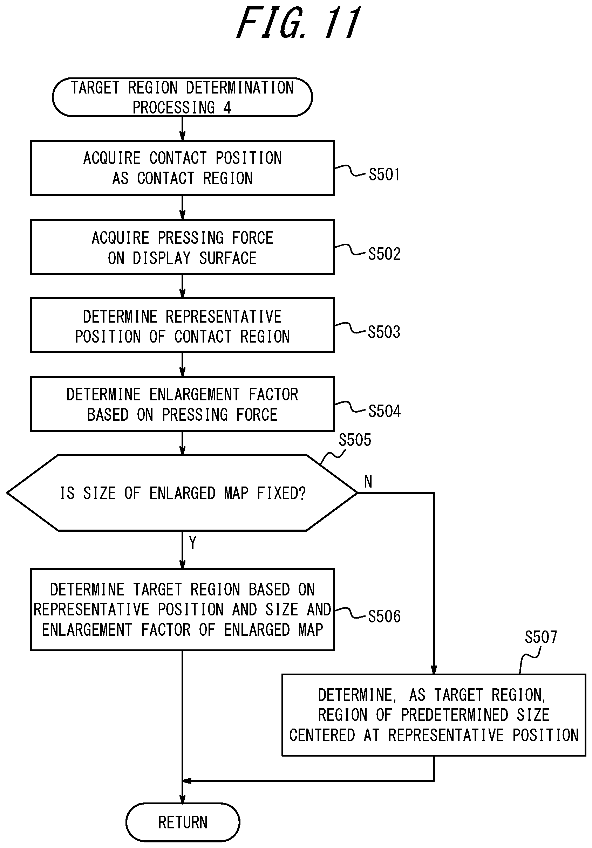

The method for determining the target region 33 in the fourth example is based on the enlargement factor determined according to the pressing force of the fingertip 32 detected by the contact detector 15 on the display surface 16, as shown in FIG. 11, and assumes that a part of the map image 30 is enlarged and displayed. The flowchart in FIG. 11 includes both cases where the size of the enlarged map 34 is fixed and where it changes.

In the flowchart of FIG. 11, S501 and S503 have the same content as S201 and S202 in FIG. 8, so the explanation is omitted.

The contact detector 15 is configured to detect the pressing force of the user's fingertip 32 pressing on the display surface 16. Between S501 and S503, the controller 12 acquires the pressing force on the display surface 16 from the contact detector 15 (S502). After S503, the controller 12 determines the enlargement factor for enlarging a part of the map image 30 based on the pressing force (S504). The controller 12 may set a larger value for the enlargement factor as the pressing force increases.

The processing from S505 to S507 is similar to S404 to S406 in FIG. 10, so the explanation is omitted.

Returning to FIG. 7, after determining the target region 33 in S103, the controller 12 acquires the information of the target region 33 displayed on the display unit 14 (S104). The information of the target region 33 may be the image of the map of the target region 33 itself. The controller 12 may extract the image of the target region 33 from the image displayed on the display unit 14. The information of the target region 33 may also be information specifying the target region 33. The information specifying the target region 33 may include size information such as the center position and radius of the target region 33, or information such as the coordinates of the vertices of the target region 33.

Next, the controller 12 generates the enlarged map 34 by enlarging the image of the target region 33 (S105). The controller 12 may simply enlarge the image of the target region 33 to generate the enlarged map 34. The controller 12 may obtain an image of the target region 33 with an enlarged scale from the map database 22. The controller 12 may add additional information to the enlarged image of the target region 33. The additional information may be information obtained from the map database 22 of the navigation system 20. The additional information may include, for example, attributes of nodes or links such as intersection names, road names, lanes, and facility information such as facility names. The controller 12 may be configured to acquire additional information related to the portion when enlarging a part of the map image 30 in cooperation with the navigation controller 21.

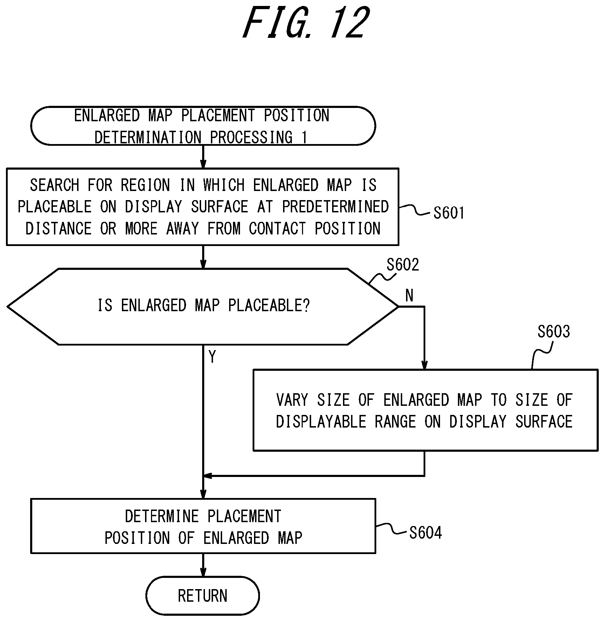

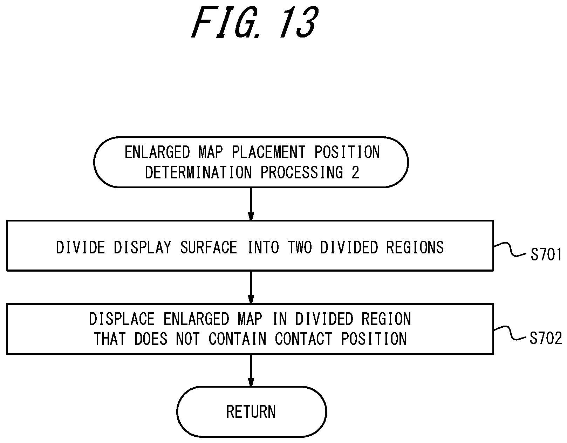

The controller 12 determines the placement position of the enlarged map 34 generated in S105 (S106). The method of displaying the enlarged map 34 includes a method of overlaying the enlarged map 34 on the map image 30 displayed on the display unit 14, and a method of dividing the display surface 16 into two divided regions 41 and 42 and displaying it in the divided region 42 that does not contain the contact position of the user's fingertip 32. Each will be explained using FIG. 12 and FIG. 13.

The flowchart in FIG. 12 shows a first example of the method for determining the placement position of the enlarged map 34. This method corresponds to the first example of displaying the enlarged map 34 shown in FIG. 3 and FIG. 4.

First, the controller 12 searches for a region where the enlarged map 34 can be placed at a predetermined distance away from the contact position of the user's fingertip 32 on the display surface 16 of the display unit 14 (S601). The enlarged map 34 is preferably placed in a position where it can be visually recognized without being obstructed by the user's fingertip 32 and hand. In addition, the user often touches the display surface 16 with the fingertip 32 facing upwards. Therefore, it is preferable that the enlarged map 34 is placed above or diagonally above the contact position of the user's fingertip 32 on the display surface 16.

As a result of S601, when the enlarged map 34 can be placed on the display surface 16 of the display unit 14 (S602: Yes), the controller 12 decides to display the enlarged map 34 at a displayable position (S604).

On the other hand, the enlarged map 34 may increase in size when the user strongly presses the fingertip 32 against the display surface 16. However, when the size of the enlarged map 34 exceeds a certain value, it cannot be placed on the display surface 16 (S602: No). In this case, the controller 12 changes the size of the enlarged map 34 to the maximum size that can be displayed within the range on the display surface 16 (S603). The controller 12 decides to place the enlarged map 34, which has been changed to a displayable size, at a displayable position (S604).

By doing so, the enlarged map 34 can be displayed enlarged up to the upper limit of the size that can be displayed on the display surface 16. When the size reaches the upper limit that can be displayed, the enlargement of the display area of the enlarged map 34 stops.

The flowchart in FIG. 12 shows a second example of how to determine the placement position of the enlarged map 34. This method corresponds to the second example of the display of the enlarged map 34 shown in FIG. 6.

First, the controller 12 divides the display surface 16 into two divided regions 41 and 42 (S701). When the controller 12 divides the display surface 16, it may divide the display surface 16 so that the divided region 42 that does not include the contact position of the user's fingertip 32 becomes smaller.

The controller 12 places the enlarged map 34 in the divided region 42 that does not include the contact position of the user's fingertip 32 (S702). As a result, the enlarged map 34 is displayed in one of the divided regions 41 and 42 that have been divided from the display surface. The enlarged map 34 is placed in a position that is easy for the user to see and does not interfere with the user's fingertip 32.

Returning to the flowchart in FIG. 7, the controller 12 displays the enlarged map 34 on the display surface 16 of the display unit 14 (S107). Here, S103 to S107 are continuously repeated, and the display of the enlarged map 34 continues while the user is in contact with the display surface 16 with the fingertip 32 in a predetermined manner. The enlargement factor and/or size of the enlarged map 34 may change due to changes in the contact manner of the user's fingertip 32 on the display surface.

Furthermore, there may be cases where the user wants to continue displaying the enlarged map 34 even after stopping contact of the fingertip 32 with the display surface 16. In that case, the user performs a predetermined operation on the display surface 16 with the fingertip 32. The predetermined operation may include, for example, a dragging operation of the fingertip 32 as shown in FIG. 5, and an operation of momentarily pressing the display surface 16 with the fingertip 32 and then stopping contact with the display surface.

When the controller 12 recognizes a predetermined operation of the fingertip 32 that is in contact with the display surface 16 (S108: Yes), it continues to display the enlarged map 34 even after the fingertip 32 is removed from the display surface 16 (S109). If the controller 12 does not recognize a predetermined operation of the fingertip 32 that is in contact with the display surface 16 (S108: No), when the fingertip 32 is removed from the display surface 16 and the contact detector 15 no longer detects contact between the fingertip 32 and the display surface 16, it erases the display of the enlarged map 34 (S110).

As described above, according to this embodiment, it is possible to easily enlarge and display a region on the map designated by the fingertip 32. Moreover, by changing the contact area or pressing force of the fingertip 32, it is possible to easily change the size of the area to be enlarged and/or the enlargement factor of the enlarged map 34. Furthermore, in conventional navigation systems, enlargement and reduction of the map changed the scale centered on the center of the screen, but in this embodiment, it becomes possible to enlarge the map image 30 by specifying any position on the map image 30. Thus, in the display apparatus 10 of the present disclosure, the operability when enlarging and displaying a region on the map is improved.

Additionally, the present disclosure is not limited to the above embodiment, and various modifications and revisions may be implemented. For example, functions or the like included in each means, each step, or the like can be rearranged without logical inconsistency, and a plurality of means, steps, or the like can be combined into one or divided.

In the above embodiment, the display apparatus 10 is used in a navigation system 20 for vehicles, but the display apparatus of the present disclosure is not limited to this. For example, the display apparatus of the present disclosure can be applied to a system for guiding pedestrians or to a display apparatus of a system that displays maps to users.

Examples of some embodiments of the present disclosure are described below. However, it should be noted that the embodiments of the present disclosure are not limited to these examples.
[Appendix 1] A display apparatus comprising:
   a display configured to display a map on a display surface;
   a contact detector configured to detect a contact position of an object on the display surface; and
   a controller configured to, when the contact detector detects contact of the object, determine, according to the contact position, a target region of the map displayed on the display, and cause the display to display an enlarged map of the target region at an increased scale.
[Appendix 2] In the display apparatus described in Appendix 1, the controller causes the display to display the enlarged map at a position that does not overlap with the contact position on the display surface.
[Appendix 3] In the display apparatus described in Appendix 2, the controller causes the enlarged map to be displayed at a position that is a predetermined distance or more away from the contact position.
[Appendix 4] In the display apparatus described in Appendix 2, the controller divides the display surface into two divided regions and causes the enlarged map to be displayed in the divided region that does not contain the contact position.
[Appendix 5] In the display apparatus described in any of Appendices 1 to 4, the contact detector detects the contact position as a position that is representative of a contact region in which the object contacts the display surface, and the controller varies the target region according to the size of the contact region.
[Appendix 6] In the display apparatus described in Appendix 5, the controller enlarges the target region as the size of the contact region increases.
[Appendix 7] In the display apparatus described in any of Appendices 1 to 6, the contact detector detects the contact position as a position that is representative of a contact region in which the object contacts the display surface, and the controller determines an enlargement factor of a scale of the target region according to the size of the contact region.
[Appendix 8] In the display apparatus described in Appendix 7, the controller increases the enlargement factor as the size of the contact region increases.
[Appendix 9] In the display apparatus described in any of Appendices 1 to 8, the contact detector is configured to detect a pressing force with which the object presses the display surface, and the controller determines an enlargement factor of a scale of the target region according to the pressing force detected by the contact detector.
[Appendix 10] In the display apparatus described in Appendix 9, the controller increases the enlargement factor as the pressing force increases.
[Appendix 11] In the display apparatus described in any of Appendices 1 to 10, the controller causes the display to continuously display the enlarged map while the contact detector is detecting the contact position.
[Appendix 12] In the display apparatus described in any of Appendices 1 to 11, if the controller recognizes a predetermined operation of the object on the display surface due to a change in the contact position detected by the contact detector, the controller continues to display the enlarged map after the contact detector stops detecting the contact position.
[Appendix 13] In the display apparatus described in any of Appendices 1 to 12, the controller is configured to acquire additional information associated with the target region of the map and causes the display to display the enlarged map with the additional information.
[Appendix 14] A display method performed by a controller of a display apparatus including a display configured to display a map on a display surface, and a contact detector configured to detect a contact position of an object on the display surface, the method comprising:
   when the contact detector detects contact of the object, determining, according to the contact position, a target region of the map displayed on the display; and
   causing the display to display an enlarged map of the target region at an increased scale.
[Appendix 15] In the display method described in Appendix 14, the controller causes the display to display the enlarged map at a position that does not overlap with the contact position on the display surface.
[Appendix 16] In the display method described in Appendix 15, the controller causes the enlarged map to be displayed at a position that is a predetermined distance or more away from the contact position.
[Appendix 17] In the display method described in Appendix 15, the controller divides the display surface into two divided regions and causes the enlarged map to be displayed in the divided region that does not contain the contact position.
[Appendix 18] In the display method described in any of Appendices 14 to 17, the contact detector detects the contact position as a contact region in which the object contacts the display surface, and the controller varies the target region according to the contact region.
[Appendix 19] In the display method described in Appendix 18, the controller enlarges the target region as the size of the contact region increases.
[Appendix 20] A navigation system comprising:
   a display configured to display a map on a display surface;
   a contact detector configured to detect a contact position of an object on the display surface; and
   a controller configured to, when the contact detector detects contact of the object, determine, according to the contact position, a target region of the map displayed on the display, and cause the display to display an enlarged map of the target region at an increased scale.

### REFERENCE SIGNS LIST

- 10: Display apparatus
- 11: transmitter/receiver
- 12: controller
- 13: touch panel
- 14: display
- 15: contact detector
- 20: navigation system
- 21: navigation controller (controller)
- 22: map DB
- 23: positioner
- 24: route calculator
- 25: image generator
- 30: map image
- 31: vehicle image
- 32: finger (object)
- 33: target region
- 34: enlarged map
- 41: first sub-image
- 42: second sub-image

## Claims

1. A display apparatus comprising:
a display configured to display a map on a display surface;
a contact detector configured to detect a contact position of an object on the display surface; and
a controller configured to, when the contact detector detects contact of the object, determine, according to the contact position, a target region of the map displayed on the display, and cause the display to display an enlarged map of the target region at an increased scale.

2. The display apparatus according to claim 1, wherein the controller is configured to cause the display to display the enlarged map at a position that does not overlap with the contact position on the display surface.

3. The display apparatus according to claim 2, wherein the controller is configured to cause the enlarged map to be displayed at a position that is a predetermined distance or more away from the contact position.

4. The display apparatus according to claim 2, wherein the controller is configured to divide the display surface into two divided regions, and cause the enlarged map to be displayed in one of the divided regions that does not contain the contact position.

5. The display apparatus according to claim 1 or 2, wherein the contact detector is configured to detect the contact position as a position that is representative of a contact region in which the object contacts the display surface, and the controller is configured to vary the target region according to a size of the contact region.

6. The display apparatus according to claim 5, wherein the controller is configured to enlarge the target region as the size of the contact region increases.

7. The display apparatus according to claim 1 or 2, wherein the contact detector is configured to detect the contact position as a representative position that is representative of a contact region in which the object contacts the display surface, and the controller is configured to determine an enlargement factor of a scale of the target region according to a size of the contact region.

8. The display apparatus according to claim 7, wherein the controller is configured to increase the enlargement factor as the size of the contact region increases.

9. The display apparatus according to claim 1 or 2, wherein the contact detector is configured to be able to detect a pressing force with which the object presses the display surface, and the controller is configured to determine an enlargement factor of a scale of the target region according to the pressing force detected by the contact detector.

10. The display apparatus according to claim 9, wherein the controller is configured to increase the enlargement factor as the pressing force increases.

11. The display apparatus according to claim 1 or 2, wherein the controller is configured to cause the display to continuously display the enlarged map while the contact detector is detecting the contact position.

12. The display apparatus according to claim 1 or 2, wherein upon recognizing a predetermined operation of the object on the display surface by a change in the contact position detected by the contact detector, the controller is configured to continuously display the enlarged map after the contact detector stops detecting the contact position.

13. The display apparatus according to claim 1, wherein the controller is configured to be able to acquire additional information associated with the target region of the map, and cause the display to display the enlarged map with the additional information.

14. A display method performed by a controller of a display apparatus including a display configured to display a map on a display surface, and a contact detector configured to detect a contact position of an object on the display surface, the method comprising:
when the contact detector detects contact of the object, determining, according to the contact position, a target region of the map displayed on the display; and
causing the display to display an enlarged map of the target region at an increased scale.

15. The display method according to claim 14, wherein the controller is configured to cause the display to display the enlarged map at a position that does not overlap with the contact position on the display surface.

16. The display method according to claim 15, wherein the controller is configured to cause the enlarged map to be displayed at a position that is a predetermined distance or more away from the contact position.

17. The display method according to claim 15, wherein the controller is configured to divide the display surface into two divided regions, and cause the enlarged map to be displayed in one of the divided regions that does not contain the contact position.

18. The display method according to claim 14 or 15, wherein the contact detector is configured to detect the contact position as a contact region in which the object contacts the display surface, and the controller is configured to vary the target region according to the contact region.

19. The display method according to claim 18, wherein the controller is configured to enlarge the target region as the size of the contact region increases.

20. A navigation system comprising:
a display configured to display a map on a display surface;
a contact detector configured to detect a contact position of an object on the display surface; and
a controller configured to, when the contact detector detects contact of the object, determine, according to the contact position, a target region of the map displayed on the display, and cause the display to display an enlarged map of the target region at an increased scale.
